# EUROPÄISCHE PATENTANMELDUNG

(11) **EP 1 675 046 A1**
(43) Veröffentlichungstag der Anmeldung: **28.06.2006**
(21) Anmeldenummer: 04030579.9
(22) Anmeldetag: 23.12.2004
(51) Int. Cl.: G06Q 10/00

(54) **Verfahren und System zur Überwachung von Kennzahlen und Ereignissen mit integrierter Generierung, Zuweisung, Überwachung und Protokollierung von Massnahmen**

(71) Anmelder: SNP Schneider-Neureither & Partner AG, 69121 Heidelberg (DE)
(72) Erfinder: Schneider-Neureither, Andreas, Dr., 69121 Heidelberg (DE)
(74) Vertreter: Meier, Frank

(57) **Zusammenfassung**

Die Erfindung betrifft ein Verfahren und ein System, das EDV-gestützte und/oder manuelle Arbeitsabläufe und/oder Arbeitsergebnisse und/oder technische Systeme in Unternehmen anhand von Kennzahlen und/oder Ereignissen für derartige Arbeitsabläufe und/oder Arbeitsergebnisse und/oder technische Systeme automatisch überwacht,

## Beschreibung

Die Erfindung betrifft ein Verfahren und ein System, das EDV-gestützte und/oder manuelle Arbeitsabläufe und/oder Arbeitsergebnisse und/oder technische Systeme in Unternehmen anhand von Kennzahlen und/oder Ereignissen für derartige Arbeitsabläufe und/oder Arbeitsergebnisse und/oder technische Systeme automatisch überwacht.
Derartige, bevorzugt in Echtzeit arbeitende, Verfahren und Systeme zur automatischen Überwachung von Arbeitsabläufen und/oder Arbeitsergebnissen und/oder technischen Systemen in Unternehmen sind aus dem Stand der Technik nicht bekannt.
Aufgabe der Erfindung ist es daher, Arbeitsabläufe und/oder Arbeitsergebnisse und/oder technische Systeme in Unternehmen zu verbessern.
Diese Aufgabe wird erfindungsgemäß durch die Gegenstände der unabhängigen Ansprüche gelöst.
Kennzahlen bzw. Kennzahlensysteme und/oder Ereignisse dienen in der vorliegenden Erfindung als ein Instrument zur automatischen Überwachung von Arbeitsabläufen und/oder Arbeitsergebnissen und/oder technischen Systemen in Unternehmen, das heißt Kennzahlen bzw. Kennzahlensysteme und/oder Ereignisse dienen in der vorliegenden Erfindung als wesentliches Instrument zu einer Verbesserung der Steuerung von Prozessen im Unternehmen und der Steuerung des gesamten Unternehmens.
Die Verbesserung der Unternehmenssteuerung ergibt sich, da sich durch die Erfindung anhand von Kennzahlen umfangreiche Informationen über Arbeitsabläufe und/oder Arbeitsergebnisse und/oder technische Systeme in Unternehmen automatisiert erfassen, in die Zukunft prognostizieren und anschaulich darstellen lassen.
Insbesondere werden bei Abweichungen oder prognostizierten Abweichungen von zuvor festgelegten Sollwerten der Kennzahlen bevorzugt die Kennzahlen, für die eine Abweichung ermittelt wurde, graphisch so aufbereitet (bevorzugt über eine Ampelanzeige), dass der Benutzer des erfindungsgemäßen Systems diese Kennzahlen schnell erkennen kann. Insbesondere können bei Abweichungen von zuvor festgelegten Sollwerten der Kennzahlen bevorzugt automatisch zuvor festgelegte Gegenmaßnahmen zum Erreichen der Sollwerte eingeleitet werden und/oder Mitarbeitern die Ausführung von bestimmten Maßnahmen zum Erreichen der Sollwerte angezeigt werden. Im letzteren Fall können die Maßnahmen dann von den zuständigen Mitarbeitern durchgeführt und gleichzeitig oder anschließend protokolliert werden. Bevorzugt lässt sich die termingerechte Erledigung der Maßnahmen automatisch überwachen. Auch lässt sich automatisch darstellen und protokollieren, ob und wann die Maßnahmen abgeschlossen worden sind und ob und wann die vorgegebenen Maßnahmen zu einem Erreichen der gewünschten Sollwerte für die Kennzahlen geführt haben.
Der automatisierte Einsatz von derartigen Kennzahlen für derartige Zwecke ist auf allen Ebenen und für alle Arbeitsabläufe eines Unternehmens möglich.
So können Kennzahlen in dem erfindungsgemäßen Verfahren und System beispielsweise verwendet werden, um
- strategische Kennzahlen der Bilanz des Unternehmens, wie beispielsweise die Eigenkapitalquote oder das Anlagevermögen des Unternehmens, automatisiert aufzubereiten und, z.B. für die Führungskräfte des Unternehmens, bevorzugt graphisch darzustellen,
- operative Kennzahlen, die Arbeitsergebnisse einzelner Abteilungen oder Ergebnisse eines bestimmten Arbeitsablaufes quantifizieren, wie beispielsweise realisierte Skontoverluste oder überfällige Debitorenposten, automatisiert aufzubereiten und, z.B. der mittleren Führungsebene des Unternehmens, zur Verfügung zu stellen,
- operative Kennzahlen zur Messung der Performance einzelner Abteilungen oder Arbeitsläufe, wie beispielsweise die durchschnittliche Zeit zwischen der Lieferung eines Artikels an einen Kunden und der Fakturierung dieses Artikels, aufzubereiten und, z.B. der mittleren Führungsebene des Unternehmens, zur Verfügung zu stellen, und/oder
- die Einhaltung eines gewünschten Unterstützungsniveaus durch elektronische Dienstleistungssysteme im Unternehmen über entsprechende Kennzahlen, wie beispielsweise die Dauer der täglichen Verfügbarkeit oder die Antwortzeit des elektronischen Dienstleistungssystems, automatisiert aufzubereiten und, z.B. darzustellen, zu steuern und/oder zu kontrollieren.

Neben Kennzahlen können auch Ereignisse in dem erfindungsgemäßen Verfahren beispielsweise verwendet werden, um die Durchführung von einzelnen Teilschritten eines Prozesses zu überwachen, beispielsweise die Erledigung des Teilschrittes "Überprüfung der Kontoauszüge" im Rahmen des Prozesses Monatsabschlusses oder des Teilschritts "Anruf beim Kunden erfolgt" im Rahmen des Prozesses Vertrieb.

Diese und andere erfindungsgemäße Prozesse lassen sich mit Ausführungsformen der vorliegenden Erfindung automatisiert überwachen.
- Die Erfindung stellt daher insbesondere ein Verfahren und ein System zur Verfügung,
- das bevorzugt Werte von Kennzahlen quantitativ ermittelt und/oder bevorzugt den Eintritt von Ereignissen überwacht,
- das bevorzugt die ermittelten Kennzahlen-Werte mit parametrisierbaren Sollwerten vergleicht und/oder bevorzugt prüft, ob ein Ereignis termingerecht eingetreten bzw. durchgeführt worden ist,
- das bevorzugt bei einer Abweichung und/oder bei einer für die Zukunft prognostizierten Abweichung von diesen Sollwerten bevorzugt automatisch den und/oder die Verantwortlichen benachrichtigt und diesen Maßnahmen zuweist,
- das bevorzugt die termingerechte Abarbeitung dieser Maßnahmen automatisch überwacht,
- das bevorzugt bei nicht-termingerechter Abarbeitung dieser Maßnahmen den Verantwortlichen und/oder deren Vorgesetzten neue Maßnahmen zuweist und
- das bevorzugt die ermittelten Werte der Kennzahlen, die aufgetretenen Abweichungen, die eingeleiteten Maßnahmen, die - sofern bekannt - Ursachen für die Abweichung und alle beteiligten Bearbeiter sowie Datum und Uhrzeit protokolliert.

Bevorzugt bilden zwei gekoppelte Teilfunktionalitäten die Kernfunktionalität einer bevorzugten Ausführungsform des erfindungsgemäßen Verfahrens bzw. Systems zur automatischen Überwachung von Arbeitsabläufen und/oder Arbeitsergebnissen in Unternehmen:
Die erste bevorzugte Teilfunktionalität wird hier teilweise auch als Activity Monitoring bezeichnet:

Bei dieser Ausführungsform des erfindungsgemäßen Verfahrens bzw. Systems werden bestimmte Prozesse in einem Unternehmen überwacht und/oder zur Unternehmenssteuerung und/oder zur Überwachung technischer Systeme dienende Kennzahlen und/oder Ereignisse automatisch ermittelt und überwacht. Diese Kennzahlen und/oder Ereignisse werden hier teilweise als Key Performance Indikatoren (KPIs) bezeichnet und können bevorzugt über beliebige Abteilungen des Unternehmens hinweg ermittelt werden. Es können sowohl vordefinierte Standard-KPIs wie auch von einem Unternehmen selbst spezifisch definierte KPIs verwendet werden. Bevorzugt regelmäßig werden die Ist-Werte der KPIs ermittelt. Zur Ermittlung dieser Ist-Werte greift die erste bevorzugte Teilfunktionalität automatisch auf im Unternehmen bevorzugt bereits vorhandene Datenquellen zu. Für jeden KPI lassen sich bevorzugt bestimmte Sollwerte festlegen. Die erste bevorzugte Teilfunktionalität vergleicht die Ist-Werte der KPIs mit den Sollwerten der KPIs. Über eine Vorhersage-Funktion, hier teilweise auch Forecast-Funktion genannt, können bevorzugt bestimmte Tendenzen in der Entwicklung der KPI und zukünftige Ereignisse vorausgesagt werden. Die Ergebnisse können bevorzugt auch grafisch aufbereitet und für einen Nutzer, z.B. online über einen Web-Browser, dargestellt werden, so dass ein Nutzer die aktuelle Situation und bestimmte Tendenzen erfassen und auf Basis der dargestellten Informationen geeignete Maßnahmen ableiten kann.
Die KPIs werden bevorzugt in kurzen, vorher bestimmbaren Intervallen ermittelt. Diese kurzen Intervalle erzeugen vorteilhaft eine hohe Aktualität der KPI.
Bei dieser Teilfunktionalität bieten die Transparenz der Information und der jederzeit verfügbare Vergleich der Realität mit eigenen Zielen für einen Nutzer eine optimale Unterstützung zum situationsgerechten Handeln.
Die zweite bevorzugte Teilfunktionalität wird hier teilweise auch als Issue Management bezeichnet:
Bei einem Vergleich der Ist-Werte bzw. Forecast-Werte der KPIs mit den vorgegebenen Sollwerten sagt die zweite Teilfunktionalität auftretende Abweichungen voraus. Bei der Überschreitung von Toleranzwerten werden vorher bestimmte Verantwortliche im Unternehmen automatisch benachrichtigt und/oder automatisch mindestens eine vordefinierte Maßnahme eingeleitet. Dieser Vorgang wird hier teilweise auch als Issue bezeichnet. Der Issue wird bevorzugt bis zur endgültigen Lösung, d.h. bis zum Erreichen der Sollwerte, verfolgt. Die Einhaltung eines zur Erledigung der Maßnahme vorgebbaren Termins wird bevorzugt ebenfalls automatisch überwacht. Wird die vordefinierte Maßnahme nicht bis zu dem vorgegebenen Erledigungstermin abgeschlossen, erfolgt bevorzugt die Einleitung einer weiteren Maßnahme, hier teilweise auch Eskalationsmaßnahme genannt. Die Einleitung der Eskalationsmaßnahme kann bevorzugt grafisch aufbereitet und, z.B. einem Vorgesetzten des zuständigen Mitarbeiters, angezeigt werden. Auch ist es möglich, dem Vorgesetzten eine Eskalations-Maßnahme zuzuweisen.
Die beiden Teilfunktionalitäten Activity Monitoring und Issue Management werden bevorzugt protokolliert.
Weitere bevorzugte Ausführungsformen der vorliegenden Erfindung betreffen ein Verfahren bzw. ein System zur automatischen Überwachung, welches zuvor definierte, der Unternehmenssteuerung dienende Kennzahlen automatisch ermittelt und überwacht. Diese Kennzahlen werden hier auch als Key Performance Indikatoren (KPIs) bezeichnet. Für jeden solchen KPI lassen sich bevorzugt individuelle Sollwerte festlegen. Bei diesen Ausführungsformen werden bevorzugt regelmäßig die Ist-Werte der Kennzahlen ermittelt, diese Ist-Werte mit den vorgegebenen Sollwerten verglichen und weiter bevorzugt möglicherweise auftretende Abweichungen angezeigt.
Es können bevorzugt bei einer Überschreitung der Sollwerte über vorbestimmte Toleranzwerte hinaus automatisch eine entsprechende Nachricht angezeigt und/oder eine oder mehrere vordefinierte Maßnahmen vorgeschlagen oder eingeleitet werden. Diese werden hier auch als Issue bezeichnet. Der Issue wird bis zur endgültigen Lösung, d.h. bis zum Erreichen der vorgegebene Sollwerte, verfolgt. Das gesamte Issue-Management kann bevorzugt protokolliert und für andere Zwecke ausgewertet werden.
Weiter bevorzugte Ausführungsformen sind in den Unteransprüchen beschrieben.
Im Folgenden werden Ausführungsbeispiele anhand der Zeichnung näher beschrieben.

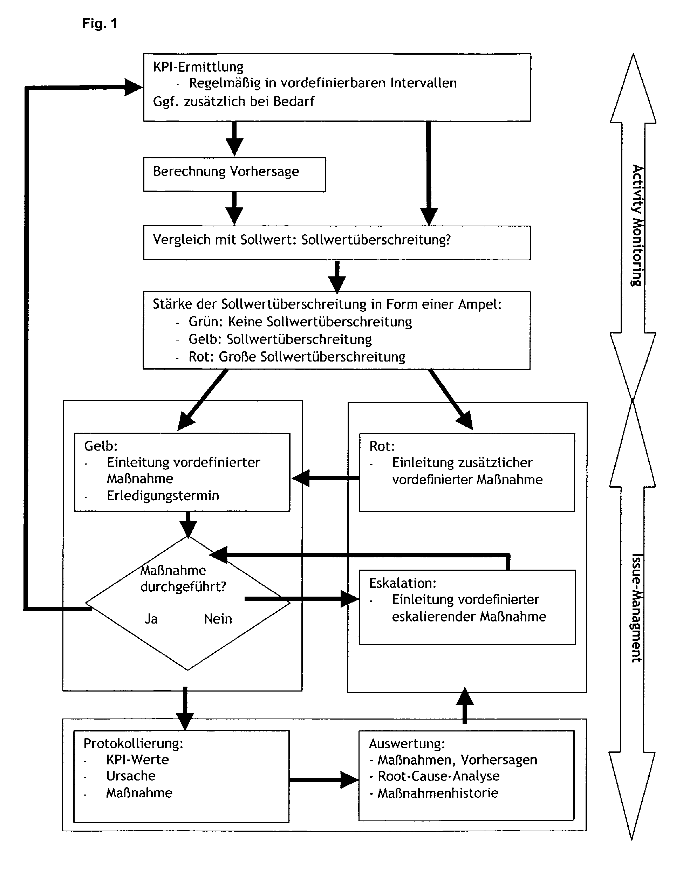

Die Zeichnung zeigt in
- Figur 1: eine schematische Darstellung der Teilfunktionalitäten Activity Monitoring und Issue Management einer Ausführungsform des erfindungsgemäßen Verfahrens zur automatischen Überwachung EDV-gestützter und/oder manueller Arbeitsabläufe und/oder Arbeitsergebnisse und/oder technischer Systeme in Unternehmen anhand von Kennzahlen und/oder Ereignissen für derartige Arbeitsabläufe und/oder Arbeitsergebnisse und/oder technische Systeme,

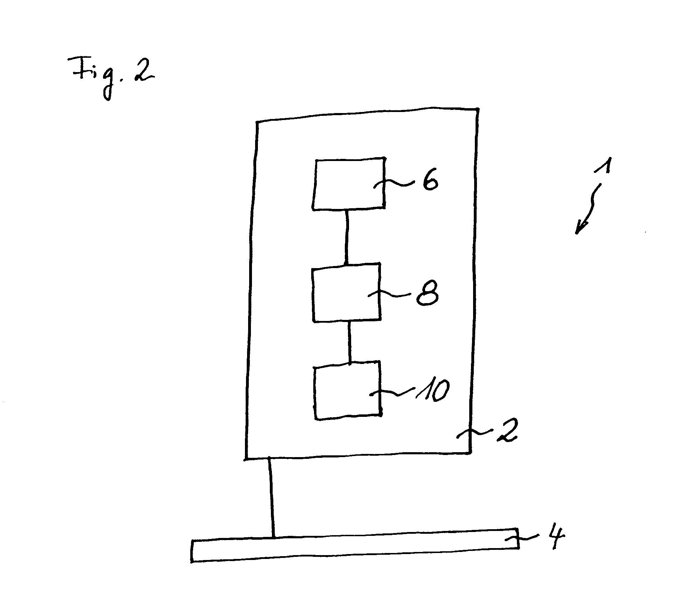

- Figur 2: eine schematische Darstellung einer Ausführungsform des erfindungsgemäßen Systems zur automatischen Überwachung EDV-gestützter und/oder manueller Arbeitsabläufe und/oder Arbeitsergebnisse und/oder technischer Systeme in Unternehmen anhand von Kennzahlen und/oder Ereignissen für derartige Arbeitsabläufe und/oder Arbeitsergebnisse und/oder technische Systeme.

Für die folgende Beschreibung der Figuren und für die anhängenden Ansprüche seien einige in der Beschreibung oder in den Ansprüchen verwendete Begriffe vorab im Folgenden kurz anhand von Beispielen beschrieben:
Ein Computernetzwerk oder auch Netzwerk ist z.B. ein Netzwerk aus Computern, so dass Computer mit anderen Computern über das Computernetzwerk kommunizieren können. Ein Computer weist z.B. einen Prozessor, einen Speicher, einen Bus und ggf. auch eine Eingabe- oder Empfangseinheit und/oder eine Ausgabe- oder Sendeeinheit, bspw. als Benutzerschnittstellen ausgestaltet, auf. Ein sogenannter Remote-Computer ist z.B. auch ein Computer. Es kann sich dabei bspw. um einen Server und/oder um einen Client handeln, wobei beide alle oben genannten Eigenschaften eines Computers aufweisen können.

Bei einem derartigen Computer kann es sich bspw. um einen herkömmlichen Personalcomputer, einen Desktop oder ein tragbares Gerät handeln. Es kann sich bei einem Computer aber auch um einen Multiprozessorcomputer, einen stiftgesteuerten Computer, einen mikroprozessorbasierten Computer, um ein programmierbares elektronisches Gerät, einen Minicomputer, einen Großrechner, ein Mobiltelefon, ein Laptop und/oder ein Palmtop handeln.
Ein Computerprogrammprodukt (CPP) ist z.B. ein Programm, welches die Erfindung ausführen kann. Ein Programmträger ist z.B. ein Träger, der ein CPP trägt. Ein Programmsignal ist z.B. ein Signal, welches ein CPP trägt.

Bei einem Prozessor kann es sich bspw. um eine zentrale Prozessoreinheit (englisch: central processing unit (CPU)), eine Mikrokontrollereinheit (englisch: micro controller unit (MCU)) und/oder um einen digitalen Signalprozessor ( englisch: digital signal processor (DSP)) handeln.
Speicher sind z.B. Elemente, die vorübergehend oder dauerhaft Daten und Anweisungen speichern. Obwohl der Speicher in der Figur 1 als Teil des Computers dargestellt ist, kann eine Speicherfunktion auch in einem Netzwerk, in Remote-Computern oder in einem Prozessor selbst, z.B. in einem Cache und/oder in einem Register oder an anderer Stelle implementiert werden. Ein Speicher kann z.B. ein nur-Lesespeicher (englisch: read only memory (ROM)) ein Zufallszugriffspeicher (englisch: random access memory (RAM)) oder ein Speicher mit anderen Zugriffsoptionen sein. Ein Speicher wird physikalisch implementiert z.B. durch computerlesbare Medien, wie etwa magnetische Speichermedien, optische Speichermedien, Halbleiterspeichermedien oder durch andere computerlesbare Speichermedien.
Ein Speicher kann Unterstützungsmodule, wie etwa ein grundlegendes Eingabe-Ausgabe-System (englisch: basic input output system (BIOS)), ein Betriebssystem (englisch: operating system (OS)), eine Programmbibliothek, einen Compiler, einen Interpreten oder einen Textverarbeitungswerkzeug enthalten.
Ein CPP implementiert Programmanweisungen und kann optional auch Daten enthalten, die einen Prozessor veranlassen, Elemente der vorliegenden Erfindung auszuführen. Mit anderen Worten kann ein CPP den Betrieb eines Computers derart kontrollieren, dass er in Übereinstimmung mit der Erfindung arbeitet. Bspw. kann ein CPP als Quellcode in einer beliebigen Programmiersprache vorhanden sein, oder als ein Objektcode oder Binärcode in einer kompilierten Form. Ein CPP kann in einem Speicher oder an beliebiger anderer Stelle lokalisiert sein. Ein CPP kann z.B. auch auf einem Träger vorhanden sein. Wenn ein CPP auf einem Träger vorhanden ist, wird das CPP, um mit einem Computer zu kommunizieren, normalerweise in eine Eingabeeinheit des Computers eingeschoben. Bei einem solchen Träger kann es sich um die oben beschriebenen Träger handeln. Im allgemeinen handelt es sich bei einem Träger um einen Artikel, der ein computerlesbares Medium aufnimmt, welches einen computerlesbaren Programmcode beinhaltet, der verwendet werden kann, um den Computer zu veranlassen, Elemente der vorliegenden Erfindung auszuführen.
Bei einer Eingabe- oder Empfangseinheit handelt es sich bspw. um eine Tastatur, einen Stift, eine Maus, einen Trackball oder um andere einen Cursor bewegende Geräte, um ein Mikrophon, einen Joystick, ein Gamepad, einen Scanner oder um ein Diskettenlaufwerk. Insbesondere können derartige Eingabeeinheiten jedoch bspw. auch drahtgebundene oder drahtlose Empfänger aufweisen, bspw. Satelliten- oder normale Antennen, Sensoren, Zähler und andere elektronische automatische Geräte enthalten.
Ausgabe- oder Sendeeinheiten können bspw. Anzeigen, wie Monitore, oder auch Lautsprecher, Drucker, Plotter oder Vibrationsalarme sein. Derartige Ausgabeeinheiten können mit anderen Computern jedoch auch mit einem Bus kommunizieren. Eingabe- und Ausgabeeinheit können z.B. zu einem einzigen Gerät zusammengeführt sein.
Ein Bus und ein Netzwerk liefern logische und physikalische Verbindungen, indem sie Anweisungs- und Datensignale zwischen den vorstehenden Elementen transportieren. Dabei werden normalerweise Verbindungen innerhalb von Computern als Bus bezeichnet, während Verbindungen außerhalb der Computer oder zwischen den Computern als Netzwerk bezeichnet werden. Optional kann solch ein Netzwerk Gateways aufweisen, bei denen es sich um spezialisierte Computer handelt, die auf Datenübertragung und Protokollumwandlung zwischen kommunizierenden Computern im Computernetzwerk spezialisiert sind. Auch die oben genannten Eingabe- und Ausgabeeinheiten können mit einem Bus oder einem Netzwerk mit einem oder mehreren Computern verbunden sein.
Bei einem Netzwerk kann es sich z.B. um ein Intranet oder um das Internet handeln. Ein Netzwerk kann drahtgebunden oder drahtlos sein. Beispiele von Netzwerken sind bspw. ein lokales Netzwerk (englisch: local area network (LAN)), ein drahtloses lokales Netzwerk (englisch: wireless LAN (WLAN)), ein offenes Netzwerk (englisch: wide area network (WAN)) oder auch öffentliche Telefonnetzwerke (englisch: public switched telephone networks (PSTN)) und integrierte Netzwerke mit digitalem Service (englisch: integrated service digital networks (ISDN)). Bei Übertragungsprotokollen kann es sich bspw. um einen Übertragungskontrollprotokoll/Internetprotokoll (TCP/IP), um ein Hypertexttransferprotokoll (HTTP), um ein sicheres Hypertexttransferprotokoll (HTTPS) oder um ein drahtloses Anwendungsprotokoll (englisch: wireless application protocol (WAP)) handeln.
Bei den die vorstehenden Elemente bspw. koppelnden Schnittstellen kann es sich bspw. um serielle oder parallele Schnittstellen, um einen Gameport, ein universellen seriellen Bus (USB), um interne oder externe Modems, um einen Videoadapter oder um eine Audio- oder TV-Karte handeln.
Die Figur 1 zeigt eine schematische Darstellung der Teilfunktionalitäten Activity Monitoring und Issue Management in einer Ausführungsform des erfindungsgemäßen Verfahrens zur automatischen Überwachung von Arbeitsabläufen und/oder Arbeitsergebnissen in Unternehmen anhand von Kennzahlen.
Die erste Teilfunktionalität Activity Monitoring und die zweite Teilfunktionalität Issue Management sind in der Figur 1 getrennt dargestellt. Das Activity Monitoring ist in den ersten vier Kästchen dargestellt. Das Issue Management ist in der unteren Hälfte der Figur 1 dargestellt.
Das Activity Monitoring beginnt gemäß dem in der Figur 1 ganz oben dargestellten Kästchen mit der bevorzugt automatischen Ermittlung der Ist-Werte der Kennzahl und/oder mit dem Eintreten bzw. Nicht-Eintreten eines Ereignisses. Kennzahlen und Ereignisse werden im folgenden teilweise unter dem Begriff KPl zusammengefasst beschrieben. Die Ermittlung der Ist-Werte der KPls geschieht bevorzugt regelmäßig in zuvor definierten Intervallen. Ggf. können Ist-Werte der KPIs bei Bedarf zu weiteren, vom Nutzer frei wählbaren Zeitpunkten, ermittelt werden. Zur Ermittlung der Ist-Werte der KPls greift die erste Teilfunktionalität automatisch auf im Unternehmen bevorzugt bereits vorhandene Daten in zuvor festgelegten Datenspeichern zu.
Für jeden KPl wurden bevorzugt in einem nicht dargestellten Schritt zuvor bestimmte Sollwerte festgelegt. Die erste Teilfunktionalität vergleicht dann gemäß dem in der Figur 1 als drittes von oben dargestellten Kästchen die Ist-Werte der KPI mit den festgelegten Sollwerten der KPI. Gemäß dem in der Figur 1 als zweites von oben dargestellten Kästchen können mit einem Vorhersage-Mittel auf der Basis der auf diese Weise ermittelten Daten bestimmte Tendenzen in der Entwicklung der KPI und auf dieser Basis wiederum zukünftige Ereignisse und Abweichungen von den zuvor definierten Sollwerten berechnet werden.
Gemäß dem in der Figur 1 als viertes von oben dargestellten Kästchen kann ein Überwachungsmittel die aktuelle Situation und/oder bestimmte Tendenzen erfassen.
Die Stärke der Sollwertabweichung lässt sich symbolisch entsprechend einer Ampel festlegen:
Grün: Keine Abweichung vom Sollwert
Gelb: Abweichung vom Sollwert (Sollwertüber- bzw. -unterschreitung)
Rot: Große Abweichung vom Sollwert, wobei zuvor festgelegt wird, dass eine große Sollwertabweichung vorliegt, wenn die Sollwertabweichung einen zuvor definierten Wert übersteigt.

Liegt keine Abweichung vom Sollwert vor, siehe "Grün", so wird von der Teilfunktionalität des Issue Management, die in der unteren Hälfte der Figur 1 dargestellt ist, in der dargestellten Ausführungsform nichts unternommen. Grundsätzlich kann die Teilfunktionalität Issue Management jedoch auch eingeleitet werden, wenn keine Abweichung vom Sollwert vorliegt, beispielsweise um genau dies als Nachricht dem Verantwortlichen mitzuteilen und zu protokollieren.
Liegt eine Sollwertabweichung vor, siehe "Gelb" bzw. "Rot", so wird in der dargestellten Ausführungsform von der Teilfunktionalität des Issue Management, die in der unteren Hälfte der Figur 1 dargestellt ist, automatisch mindestens eine geeignete vordefinierte Maßnahme eingeleitet und durchgeführt oder dem für den KPI bzw. den zugrundeliegenden Prozessschritt verantwortlichen Mitarbeiter, hier teilweise Sachbearbeiter genannt, zugewiesen, siehe linke Seite, erster Kasten der zweiten Teilfunktionalität Issue Management. Die Erledigung dieser Maßnahme wird automatisch mit einem bestimmten Termin versehen, bis zu dem die Maßnahme durchgeführt und abgeschlossen worden sein muss.
Ist der Sollwert entsprechend deutlich überschritten, siehe "Rot", so wird zusätzlich zu der vordefinierten Maßnahme, die auch dem Sachbearbeiter zugewiesen worden sein kann, eine Informationsmeldung generiert und an den Vorgesetzten des Sachbearbeiters, hier teilweise Manager genannt, gesendet, siehe rechte Seite, erster Kasten der zweiten Teilfunktionalität Issue Management. Anstelle oder in Ergänzung zu der Informationsmeldung kann eine zusätzliche vordefinierte Maßnahme eingeleitet und/oder dem Manager mit bevorzugt vordefiniertem Erledigungstermin zugewiesen werden.
Ist die Maßnahme, die eingeleitet wurde oder die dem Sachbearbeiter oder Manager zugewiesen worden ist, nicht bis zu dem vorgegebenen Termin erledigt worden, siehe Antwort "Nein", so wird dies einem Eskalationsmittel mitgeteilt, welches dann automatisch entweder die Maßnahme wiederholt oder wiederholt zuweist oder eine über die geforderte Maßnahme hinaus gehende, sogenannte eskalierende Maßnahme einleitet. Die Einleitung dieser eskalierenden Maßnahme und auch der anderen Maßnahmen kann von der Freigabe durch einen Nutzer abhängig gemacht werden. Auch die eskalierende Maßnahme wird bevorzugt mit einem Erledigungstermin versehen, bis zu dem die Maßnahme abgeschlossen worden sein muss. Auch die Durchführung dieser eskalierenden Maßnahme wird überwacht und geprüft, ob die Maßnahme durchgeführt wurde. Ist dies nicht geschehen, so wird die eskalierende Maßnahme erneut eingeleitet.
Ist die Maßnahme jedoch bis zu dem vorgegebenen Termin durchgeführt worden, siehe Antwort "Ja", so hat dies eine Rückwirkung auf die KPI. Diese Rückkopplung zum KPI ist durch den von der Stelle "Ja" der zweiten Teilfunktionalität zurück zu der KPI-Ermittlung der ersten Teilfunktionalität gehenden Pfeil symbolisiert. Ggf. wird dies vom Sachbearbeiter bzw. Manager in dem erfindungsgemäßen System eingegeben und vorzugsweise wird die Ursache für die Schwellwertabweichung vermerkt.
Nach Erledigung aller Maßnahmen wird der Ampelstatus des betroffenen KPI vom erfindungsgemäßen System auf "grau" (nicht dargestellt) gesetzt. "Grau" bedeutet, dass alle Maßnahmen erledigt worden sind, der KPI jedoch noch nicht neu ermittelt worden ist, also noch keine systemgestützte Kontrolle des KPI-Wertes stattgefunden hat. Die Art der Neuermittlung des KPI hängt von der Ausführungsform des erfindungsgemäßen Systems ab: in einer (nicht dargestellten) Ausführungsform des erfindungsgemäßen Systems kann der Wert des KPI beispielsweise vom Manager neu ermittelt werden. In einer anderen (nicht dargestellten) Ausführungsform wird der Wert des KPIs erst im Rahmen der regelmäßigen KPI-Ermittlung neu ermittelt. Auch diese Rückkopplung zum KPI ist durch den von der Stelle "Ja" der zweiten Teilfunktionalität zurück zu der KPI-Ermittlung der ersten Teilfunktionalität gehenden Pfeil symbolisiert.
Nicht dargestellt ist, dass die Ergebnisse auch grafisch aufbereitet und für einen Nutzer, z.B. online über einen Web-Browser, dargestellt werden können, so dass ein Nutzer die aktuelle Situation und bestimmte Tendenzen erfassen und hieraus für sich weitere geeignete Maßnahmen ableiten kann.
Die beiden Teilfunktionalitäten Activity Monitoring und als Issue Management werden in der dargestellten Ausführungsform protokolliert, siehe linke Seite, letzter Kasten der zweiten Teilfunktionalität Issue Management.
Diese Protokolle können einer Auswertung zugeführt werden, siehe rechte Seite, letzter Kasten der zweiten Teilfunktionalität Issue Management. Ergibt diese Auswertung, dass zusätzlich weitere Maßnahmen notwendig sind, so werden diese gemäß dem in Figur 1 rechts untern von der Auswertung zu dem Kästchen Eskalation eingezeichneten Pfeil eingeleitet. Darüber hinaus können diese manuell beispielsweise vom Manager im erfindungsgemäßen System erfasst werden.
Die erstellten Protokolle lassen sich von einem Nutzer in Form von in der Figur nicht dargestellten Reports aufrufen, die weiter in einer hierarchisch gegliederten Report-Struktur grafisch übersichtlich gegliedert werden können.
Nicht nur diese Reports, sondern auch alle anderen vorgenannten Schritte lassen sich über Ausgabe- oder Sendeeinheiten anzeigen oder in Speichern abspeichern.
Beispiele derartiger Reports sind in der folgenden Tabelle 1 dargestellt, in der in der linken Spalte neben einer laufenden Nummer die Bezeichnung des Reports und in der rechten Spalte eine kurze Beschreibung des Reports aufgenommen ist:

**Tabelle 1 :**

| **Nr.** | **Report** | **Beschreibung** |
|---|---|---|
| 1 | Übersicht über KPI-Ist-Werte | Der Report zeigt die ermittelten Ist-Werte der KPIs an. |
| 2 | Root-Cause-Analyse | Der Report zeigt an, welche Schwellwertabweichungen aufgetreten sind, ob die aufgetretenen Schwellwertabweichungen beendet worden sind, welche Ursache die Schwellwertabweichungen hatten und durch welche Aktiväten die Schwellwertabweichungen beendet worden sind. |
| 3 | Maßnahmenhistorie | Der Report listet zu jeder aufgetretenen Schwellwertüberschreitung die getroffenen Maßnahmen(n) auf. |

Durch die Report-Funktionalität wird eine Dokumentation von aktuellen und/oder vorhergesagten KPI-Werten, von Maßnahmen und Ursachen zur Verfügung gestellt.
Die zuvor mit Bezug auf Figur 1 beschriebenen Funktionalitäten bzw. Verfahrenschritte des erfindungsgemäßen Verfahrens lassen sich alle als ein CPP darstellen. Dieses kann in einem Speicher abgelegt werden und auf einem Prozessor eines Computers zum laufen gebracht werden. Der Computer kann Bestandteil eines Netzwerks sein, so dass eine Vielzahl von Nutzern Zugriff auf die Funktionen des CPP haben. Die verwendeten Sollwerte können dabei bereits in dem CPP implementiert sein, oder sie können von den Nutzern des CPP diesem über eine Eingabeeinheit vorgeschrieben werden.
Die Figur 2 zeigt eine schematische Darstellung einer Ausführungsform des erfindungsgemäßen Systems 1 zur automatischen Überwachung von Arbeitsabläufen und/oder Arbeitsergebnissen in Unternehmen anhand von Kennzahlen auf der Basis eines solchen CPP.
Das System der in Figur 2 dargestellten Ausführungsform besteht aus einem Computer 2 in einem Computernetzwerk 4. Der Computer 2 weist einen Speicher 6 auf, wobei der Speicher 6 mindestens eine Kennzahl mindestens eines Arbeitsablaufs und/oder mindestens eines Arbeitsergebnisses in dem Unternehmen, einen bestimmten Sollwert des Arbeitsablaufs und/oder Arbeitsergebnisses, ein Erfassungsmittel, ein Vergleichsmittel und ein Einleitungsmittel enthält. Der Computer 2 weist weiterhin einen mit dem Speicher 6 verbundenen Prozessor 8 auf.
Die in dem Speicher 6 als Teil des CPP gespeicherten Erfassungsmittel sind ausgebildet, Anweisungen an den Prozessor 8 zu geben, so dass die Kennzahl ermittelt wird. Die in dem Speicher 6 als Teil des CPP gespeicherten Vergleichsmittel sind ausgebildet, Anweisungen an den Prozessor zu geben, so dass bei ermittelter Kennzahl die ermittelte Kennzahl mit dem gespeicherten Sollwert verglichen wird. Die in dem Speicher 6 als Teil des CPP gespeicherten Einleitungsmittel sind ausgebildet, Anweisungen an den Prozessor 8 zu geben, so dass nichts veranlasst wird, wenn von dem Vergleichsmittel keine Abweichung vom Sollwerts festgestellt wird, und eine zuvor definierte Maßnahme zum Erreichen des Sollwerts eingeleitet wird, wenn von dem Vergleichsmittel eine Abweichung des Sollwerts festgestellt wird.
Weiterhin sind mit dem Prozessor verbundene Anzeigemittel 10 vorgesehen, um einem Nutzer ermittelte Kennzahlen, zugehörige Sollwerte, zugehörige Sollwertabweichungen, zugehörige Maßnahmen, zugehörige zusätzliche Maßnahmen, zugehörige zusätzliche eskalierende Maßnahmen und jeweils zugehörige Zeitrahmen anzuzeigen.

## Patentansprüche

1. Verfahren zur automatischen Überwachung eines Arbeitsablaufs und/oder Arbeitsergebnisses und/oder technischen Systems in einem Unternehmen anhand mindestens einer Kennzahl des Arbeitsablaufs und/oder des Arbeitsergebnisses mit den Schritten:
a) die Kennzahl wird ermittelt,
b) die ermittelte Kennzahl wird mit einem bestimmten Sollwert des Arbeitsablaufs und/oder Arbeitsergebnisses verglichen,
c) wird eine Abweichung vom Sollwert festgestellt, so wird nichts veranlasst,
d) wird eine Abweichung vom Sollwert festgestellt, so wird eine zuvor definierte Maßnahme zum Erreichen des Sollwerts eingeleitet.

2. Verfahren nach Anspruch 1,
wobei die Kennzahl auf der Basis von in dem Unternehmen vorhandener Daten ermittelt wird.

3. Verfahren nach einem der vorstehenden Ansprüche,
wobei anstelle der Ermittlung einer Kennzahl geprüft wird, ob ein bestimmtes, vorher definiertes Ereignis zur automatischen Überwachung eines Arbeitsablaufs und/oder Arbeitsergebnisses und/oder technischen Systems zum vorgesehen Zeitpunkt eintritt bzw. durchgeführt wird.

4. Verfahren nach einem der vorstehenden Ansprüche,
wobei dann, wenn die Abweichung vom Sollwert einen zuvor definierten Wert übersteigt, eine zusätzliche zuvor definierte Maßnahme zum Erreichen des Sollwerts eingeleitet wird.

5. Verfahren nach einem der vorstehenden Ansprüche,
wobei über ein Prognoseverfahren prognostiziert wird, dass zu einem zukünftigen Zeitpunkt eine Abweichung vom Sollwert auftritt.

6. Verfahren nach einem der vorstehenden Ansprüche,
wobei mit der Einleitung der Maßnahme und/oder der zusätzlichen Maßnahme ein Zeitrahmen für die Durchführung der Maßnahme und/oder der zusätzlichen Maßnahme festgelegt wird.

7. Verfahren nach einem der vorstehenden Ansprüche,
wobei die Einleitung, die Durchführung und/oder die Einhaltung des Zeitrahmens der Durchführung der Maßnahme und/oder der zusätzlichen Maßnahme überwacht wird.

8. Verfahren nach einem der vorstehenden Ansprüche,
wobei bei Nicht-Durchführung der Maßnahme und/oder der zusätzlichen Maßnahme und/oder bei Nicht-Einhaltung des Zeitrahmens für die Durchführung der Maßnahme und/oder der zusätzlichen Maßnahme eine vordefinierte eskalierende Maßnahme eingeleitet wird.

9. Verfahren nach einem der vorstehenden Ansprüche,
wobei mit der Einleitung der vordefinierten eskalierenden Maßnahme ein Zeitrahmen für die Durchführung der zusätzlichen eskalierenden Maßnahme festgelegt wird.

10. Verfahren nach einem der vorstehenden Ansprüche,
wobei die Einleitung, die Durchführung und/oder die Einhaltung des Zeitrahmens für die Durchführung der zusätzlichen eskalierenden Maßnahme überwacht wird.

11. Verfahren nach einem der vorstehenden Ansprüche,
wobei bei Nicht-Durchführung der Maßnahme und/oder der zusätzlichen Maßnahme und/oder bei Nicht-Einhaltung des Zeitrahmens für die Durchführung der Maßnahme und/oder der zusätzlichen Maßnahme eine vordefinierte eskalierende Maßnahme eingeleitet wird.

12. Verfahren nach einem der vorstehenden Ansprüche,
wobei die Schritte a) und b) in zuvor definierten zeitlichen Intervallen, und/oder bevorzugt in Echtzeit, durchgeführt werden.

13. Verfahren nach einem der vorstehenden Ansprüche,
wobei die ermittelte Kennzahl, ein zugehöriger Sollwert, eine zugehörige Sollwertüberschreitung, eine zugehörige Maßnahme, eine zugehörige zusätzliche Maßnahme, eine zugehörige zusätzliche eskalierende Maßnahme, ein jeweils zugehöriger Zeitrahmen angezeigt und/oder protokolliert werden.

14. System (1), insbesondere Computer (2) oder Computernetzwerk (4), zur automatischen Überwachung eines Arbeitsablaufs und/oder Arbeitsergebnisses und/oder technischen Systems in einem Unternehmen anhand mindestens einer Kennzahl des Arbeitsablaufs und/oder des Arbeitsergebnisses,
mit einem Speicher (6), wobei der Speicher (6) mindestens eine Kennzahl mindestens eines Arbeitsablaufs und/oder mindestens eines Arbeitsergebnisses in dem Unternehmen, einen bestimmten Sollwert des Arbeitsablaufs und/oder Arbeitsergebnisses, ein Erfassungsmittel, ein Vergleichsmittel und ein Einleitungsmittel enthält,
mit einem mit dem Speicher (6) verbundenen Prozessor (8) eines Computers (2),
wobei das Erfassungsmittel ausgebildet ist, Anweisungen an den Prozessor (8) zu geben, so dass
a) die Kennzahl ermittelt wird,
wobei das Vergleichsmittel ausgebildet ist, Anweisungen an den Prozessor (8) zu geben, so dass bei ermittelter Kennzahl
b) die ermittelte Kennzahl mit einem bestimmten Sollwert des Arbeitsablaufs und/oder Arbeitsergebnisses verglichen wird,
wobei das Einleitungsmittel ausgebildet ist, Anweisungen an den Prozessor (8) zu geben, so dass
c) nichts veranlasst wird, wenn von dem Vergleichsmittel keine Überschreitung des Sollwerts festgestellt wird, und
d) eine zuvor definierte Maßnahme zum Erreichen des Sollwerts eingeleitet wird, wenn von dem Vergleichsmittel eine Überschreitung des Sollwerts festgestellt wird.

15. System (1) nach dem vorstehenden Anspruch,
wobei die Weisung zur Ermittlung der Kennzahl Teil des Erfassungsmittels ist, automatisch aus dem Speicher (6) abgerufen wird und/oder ein vorgebbarer Zeittakt ist, so dass die Kennzahl entsprechend den durch den Zeittakt vorgegeben Intervallen ermittelt wird.

16. Computerprogrammprodukt zur automatischen Überwachung eines Arbeitsablaufs und/oder Arbeitsergebnisses und/oder technischen Systems in einem Unternehmen anhand mindestens einer Kennzahl des Arbeitsablaufs und/oder des Arbeitsergebnisses,
mit einem Erfassungsmittel, einem Vergleichsmittel und einem Einleitungsmittel,
wobei das Erfassungsmittel ausgebildet ist, Anweisungen an einen Prozessor (8) eines Computers (2) zu geben, so dass
a) die Kennzahl ermittelt wird,
wobei das Vergleichsmittel ausgebildet ist, Anweisungen an einen Prozessor (8) eines Computers (2) zu geben, so dass
b) die ermittelte Kennzahl mit einem bestimmten Sollwert des Arbeitsablaufs und/oder Arbeitsergebnisses verglichen wird,
wobei das Einleitungsmittel ausgebildet ist, Anweisungen an einen Prozessor (8) eines Computers (2) zu geben, so dass
c) nichts veranlasst wird, wenn von dem Vergleichsmittel keine Überschreitung des Sollwerts festgestellt wird, und
d) eine zuvor definierte Maßnahme zum Erreichen des Sollwerts eingeleitet wird, wenn von dem Vergleichsmittel eine Überschreitung des Sollwerts festgestellt wird.
